# EUROPEAN PATENT SPECIFICATION

(11) **EP 2 917 654 B1**
(45) Date of publication and mention of the grant of the patent: **02.11.2016**
(21) Application number: 13803190.1
(22) Date of filing: 06.11.2013
(51) Int. Cl.: F24F 11/00

(54) **AN AIR MOVEMENT SYSTEM**
LUFTZIRKULATIONSSYSTEM
SYSTÈME DE MOUVEMENT D'AIR

(30) Priority: 07.11.2012 GB 201220034
(43) Date of publication of application: 16.09.2015
(73) Proprietor: Western Air Ducts Ltd, Radstock, Somerset BA3 4BS (GB)
(72) Inventor: LINTERN, Chris, Radstock Somerset BA3 4BS (GB)
(74) Representative: Handsome I.P. Ltd
(86) International application number: PCT/GB2013/052897
(87) International publication number: WO 2014/072698

(56) References cited:
- US-A- 5 908 154
- US-A1- 2005 155 365
- US-A1- 2011 213 502

## Description

The present invention relates generally to an air movement system and a method of operating an air movement system and finds particular, although not exclusive, utility in an air extraction system.

Air movement systems comprising a fan drawing air out of exhaust points or blowing air in through supply points are well known. It is also known to include dampers, or valves, to control or regulate the flow of air through the ducting associated with such systems. These dampers can be used to isolate areas of a building from direct air movement. Moreover, the fans can be regulated to control their speed and thus the volume flow rate of air through them. The controls for such systems tend to be individual manually controlled switches.

The air movement systems may be forced supply systems, extract systems or may comprise a combination of exhaust and supply such as found in large buildings, for example hotels.

However, with increased attention being paid to the efficiency of all electrical systems, for both economic and environmental considerations, it is desirable to have a better controlled air movement system so that all manner of system criteria may be monitored and regulated to improve efficiency thereof.

US2005155365 discloses an air movement system air movement system may comprise at least one fan; a plurality of exhaust and/or supply points connected to the at least one fan by ducting; a plurality of dampers, each damper associated with one of the at least one exhaust and/or supply points, each damper for regulating air flow through the respective associated exhaust and/or supply point; a plurality of sensors, each sensor associated with either: one of the at least one exhaust and/or supply points for sensing a predefined activity within a predefined locale of the at least one exhaust and/or supply points; a predefined point in the ducting; and a programmable controller, wherein the controller is connected to the fan, the dampers and the sensors, and is configured to: automatically adjust the damper associated with one of the at least one exhaust and/or supply points; and adjust the at least one fan; in response to a signal generated by the sensor associated with the same one of the at least one exhaust and/or supply points.

In a first aspect the invention provides an air movement system programmable controller for operating an air movement system, the air movement system comprising: at least one fan; a plurality of exhaust and/or supply points connected to the at least one fan by ducting; a plurality of dampers, cach damper associated with one of the at least one exhaust and/or supply points, each damper for regulating air flow through the respective associated exhaust and/or supply point; and a plurality of sensors, each sensor associated with either: one of the at least one exhaust and/or supply points for sensing a predefined activity within a predefined locale of the at least one exhaust and/or supply points; or a predefined point in the ducting; wherein the programmable controller is connectable to the fan, the dampers and the sensors, and determines if the at least one fan is fixed-speed or variable-speed; determines which dampers are open; receives a a signal generated by the plurality of sensors, the signal indicative of a sensed predefined activity; in response to a determination that the at least one fan is a fixed-speed fan, operates the at least one fan in accordance with a pre-set rule, the pre-set rule selected from a plurality of pre-set rules in response to a determination as to which dampers are open, and in response to a reception of the signal indicative of the sensed predefined activity; in response to a determination that the at least one fan is a variable-speed fan, operates the at least one fan such that the speed of the at least one fan is set to be approximately proportional to the ratio of the total cross-sectional area of all of the plurality of dampers that are open to the cross-sectional area of a predefined duct; and automatically adjust the damper associated with one of the at least one exhaust and/or supply points, and adjust the at least one fan, in response to a signal generated by the sensor associated with the same one of the at least one exhaust and/or supply points.

An air movement system may comprise at least one fan; a plurality of exhaust and/or supply points connected to the at least one fan by ducting; a plurality of dampers, each damper associated with one of the at least one exhaust and/or supply points, each damper for regulating air flow through the respective associated exhaust and/or supply point; a plurality of sensors, each sensor associated with either: one of the at least one exhaust and/or supply points for sensing a predefined activity within a predefined locale of the at least one exhaust and/or supply points; a predefined point in the ducting; and a programmable controller according to the present invention, wherein the controller is connected to the fan, the dampers and the sensors, and is configured to: automatically adjust the damper associated with one of the at least one exhaust and/or supply points; and adjust the at least one fan; in response to a signal generated by the sensor associated with the same one of the at least one exhaust and/or supply points.

The sensors may be any one or more of a PIR, a pressure sensor, a temperature sensor, a current sensor or any other manner of 24-volt switch. Any one of the preceding list may be excluded from being provided.

In this way, a PIR in a hotel bedroom may detect the presence or absence of occupants and inform the controller of this fact. The controller may then operate the system to supply fresh air to the bedroom when occupied and cease supplying it when not occupied. Since in hotels such air movement systems are relatively large and complex several fans, both exhaust and supply, may be provided. Furthermore relatively long lengths of ducting, with main ducts and branch ducts, are provided throughout the building.

The controller may be programmed to operate the system in as an efficient manner as possible. For instance, the controller may vary fan speeds, and open and close dampers to regulate air flow throughout the various ducts to ensure that air is only supplied and extracted where and when necessary.

The system may be pre-programmed to keep open predetermined dampers and a fan running at a predetermined speed when the system is in a 'stand-by' state, where no activity is occurring within the building.

The controller may be connected wirelessly and/or by wire to the fan, the dampers and the sensors. A combination of wireless and wired connections is contemplated.

The controller may be configured to automatically adjust at least one damper and the at least one fan to maintain a minimum or maximum airflow through the air movement system at predetermined times of day and for a predetermined period of time regardless of sensed activity or inactivity.

For instance, using the hotel example, the system may be set to supply fresh air into every bedroom at a maximum volume flow rate (or at least, at a rate greater than typical), and exhaust air from every bathroom at a maximum volume flow rate (or at least, at a rate greater than typical), for thirty minutes at 12:00 hours every day when the hotel rooms are typically unoccupied. Individual room overrides to prevent such air exchange may be provided as required, for instance by the use of a PIR to detect occupancy, or by a receptionist informing the system not to disturb that room until further notice.

The minimum airflow situation may be exemplified in a situation such as a factory where dust is created during working hours and it is undesirable to switch off the system immediately after the last person has left. Rather, the system may be operated for a further predetermined fifteen minutes to ensure no settling of dust within the system.

The system may include a first power supply, and any one or more of the dampers, fan, sensors and controller may include a second power supply for adjusting the at least one fan and the plurality of dampers when the first power supply is unavailable. The second power supply may be a battery back-up supply.

In this way, graceful shut-down of the system may be effected if the first power supply fails so as to prevent exhaust or supply points being left open or closed.

The controller may include an override setting such that each damper and the fan are controllable individually and distinct from any pre-programming. This allows for unusual situations such as chemical spills leading to noxious fumes in industrial settings.

The controller may include a pre-determinable time period after which the override setting will be cancelled returning the controller to run in accordance with its pre-programming. This prevents the system being left with the fans running at maximum unnecessarily after the incident has been attended to.

However, the controller may be configured to prevent the fan being operated at a predetermined volume-flow rate when a predetermined number of dampers are in the closed position. For instance, the controller may be pre-programmed to prevent the fan being run at maximum volume flow-rate with all the dampers in the closed position as this might collapse the ducts, or at the very least, cause them damage. Other scenarios may also be pre-programmed to prevent damage to the system as appropriate. For instance, the controller could be pre-programmed to ensure that a minimum number of dampers must be open before the fan is increased in speed beyond a predetermined threshold value.

The controller may be configured to connect to a graphical user interface, or the system may include a graphical user interface, and any one or more of the fan, dampers, sensors and exhaust/supply points may be indicated graphically on the interface, and the controller may be programmable by means of visually associating on the interface any one or more of the fan, dampers, sensors and exhaust/supply points with any of the others.

The graphical user interface may be a screen or monitor. It may be incorporated into the controller or may be connected thereto. Also, the screen may be part of a computer to which the controller is connected.

Each element of the system may be represented by an icon on the screen. A "drag and drop" approach may be used to connect or associate the various elements to one another. Other ways of associating them is also contemplated such as by drawing lines between the various elements with a mouse.

Characteristics of the various elements may be entered using the graphical user interface, such as the fan diameter, minimum and maximum speed, duct sizes and lengths, the type of locale by each exhaust and supply point and so on.

The graphical user interface may be configured to provide graphical illustrations of predetermined criteria relating to the system over time. For instance, the predetermined criteria may be one or more of power consumption, volume flow-rates and cost. This information may be obtained by processing data stored in a memory, and therefore the system may include a memory for storing system events over time.

The controller may be configured to be connectable to a computer over a communications network. For instance, a LAN, WAN or other such system. In this way and with appropriate permissions the system may be pre-programmed and interrogated remotely.

The controller may be configured to be accessible via a web browser.

The air movement system may include a filter for filtering air as it passes into or out of the system. The filter may be connected to the controller. This may allow the controller to monitor the filter's performance and/or state of efficiency such that a signal may be generated when maintenance is required.

In a second aspect, the invention provides a method of operating an air movement system comprising the steps of providing an air movement system as described above, determining if the fan is fixed-speed or variable-speed, determining which dampers are open, providing a pressure sensor at a pre-defined point in the ducting and determining the air pressure, and using the controller to operate the fan in accordance with pre-set rules dependent on the determination as to whether or not the fan is fixed-speed or variable speed, on the determination as to which dampers are open, and on the determination of measured air pressure at the pre-defined point, wherein one pre-set rule operates the fan if it is a variable-speed fan such that the speed is set to be approximately proportional to the ratio of the total cross-sectional area of each damper which is open to the cross-sectional area of a pre-defined duct.

If the ratio is less than a predefined threshold value the fan may be operated at a pre-set speed. For instance, a minimum speed may be set.

The pre-defined duct may be the main intake and/or exhaust duct.

The system may include a filter and the method may further comprise the steps of determining if the fan is operational and operating the fan in accordance with said determination. For instance, if the fan is running then the filter may be activated. Alternatively, if the fan is not running the filter may be deactivated.

The system may be sub-divided into groups of devices and any of the method steps may be repeated for each group to ensure granular control of the overall system.

Throughout this specification the term "air movement system" has been used, however, it will be understood that in one embodiment, the term "ventilation system" may be used alternatively or additionally.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the claims. The reference figures quoted below refer to the attached drawings.
Figure 1 is a schematic plan of an air movement system according to one embodiment of the invention; and
Figure 2 is a schematic plan of an air movement system according to another one embodiment of the invention.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may refer to different embodiments. Furthermore, the particular features, structures or characteristics of any embodiment or aspect of the invention may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may, in some embodiments, mean only one.

The invention will now be described by a detailed description of several embodiments of the invention. It is clear that other embodiments of the invention can be configured according to the knowledge of persons skilled in the art without departing from the underlying concept or technical teaching of the invention, the invention being limited only by the terms of the appended claims.

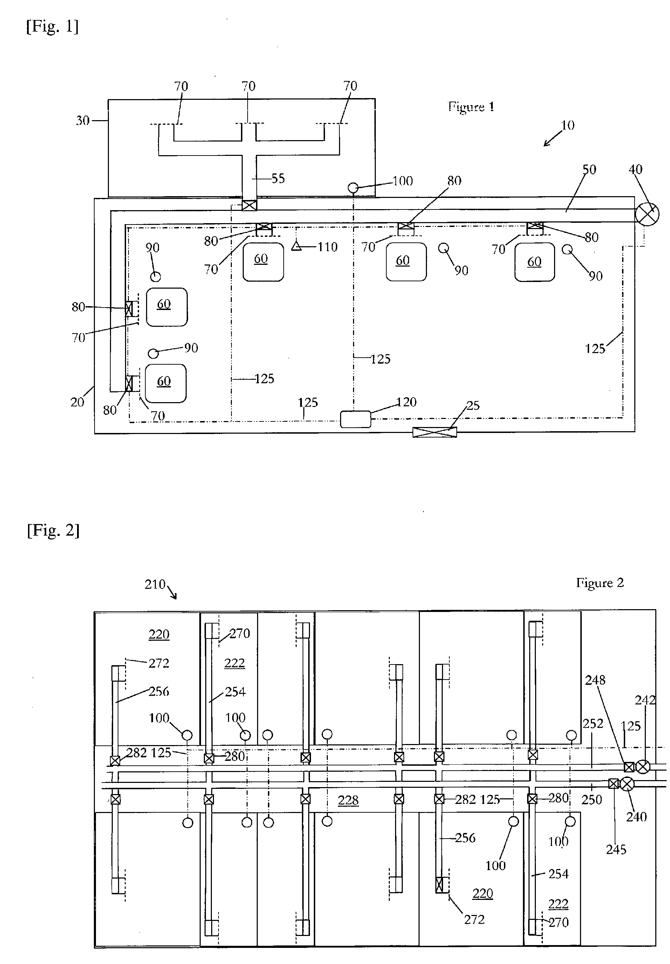

In Figure 1 an air movement 10 is shown. The system 10 is installed in a series of two rooms 20, 30. The system 10 comprises an exhaust fan 40 at one end of a main duct 50 which extends through one of the room 20. The fan 40 is located outside the room 20 but it could be positioned in the body of the wall, or inside the room 20.

An air inlet 25 is provided in an external wall of the room 20.

In the room 20, five work stations 60 are located. Each work station creates fumes, dust and or heat and needs air extraction from its locale. This is effected by extraction points 70 provided adjacent each work station 60. The extraction points are linked to the main duct 50 such that any fumes, dust or heat is sucked into the duct and expelled from the room via the fan 40.

The air flow through each extraction point 70 is regulated by a damper or valve 80 provided in the main duct 50 adjacent each extraction point 70.

Each damper 80 is controlled by the controller 120. The dampers are linked to the controller 120 by means of control wiring 125, although wireless connections are also contemplated.

The controller 120 is pre-programmed to open each damper 80 as required and in the light of signals generated by each sensor 90, 110 located adjacent each work station 60.

Each sensor 90 may have a wireless link to the controller 120. However, wired connections are also contemplated with some sensors 110.

Each sensor may be of the type that directly detects the presence of personnel such as a PIR, or may be a current detector 110 detecting when the actual work station is in use. For instance, when a lathe is switched on the current change in the electrical supply is detected. Other types of sensor such as temperature gauges, sound detectors are also envisaged. A simple switch may also be incorporated if necessary. More than one type of sensor may be located adjacent each work station 60.

In the adjacent room 30 a branch duct 55 off the main duct 50 provides a route for extracting air from the room 30. There are three extraction points 70 shown. A sensor 100 detects the presence of personnel in the room. The sensor 100 is connected by wire 125 to the controller 120.

A damper 85 is provided at the point where the branch duct 55 extends away from the main duct 50. In this way if the pre-programming of the controller dictates that no extraction is to take place from the room 30 if it has been empty for more than 15 minutes then the controller may close the damper 55 in the branch duct thus isolating that room from the rest of the system. In this way, the fan speed may be reduced as less air requires moving. Moreover, by closing the branch duct 55 at a point near to the main duct 50 there will be less losses due to friction as otherwise the branch duct may be regarded as "dead-leg".

The controller may be pre-programmed such that a minimum airflow is always maintained through the main duct 50 even when no work stations 60 are in use. To effect this the controller runs the fan at a set speed and keeps open a predetermined number of dampers 80, even if only slightly open. The dampers may be regarded as booster dampers and it may be the two on the left hand side of Figure 1.

When all personnel have gone home at the end of a working day, the controller 120 may be pre-programmed so that it only turns off the fan completely fifteen minutes after the last personnel presence has been detected, or other such signal has stopped being transmitted by any of the sensors.

In the morning, before the working day starts, the controller may be pre-programmed to undertake a clean of the system by opening all dampers fully and running the fan at maximum speed for a predetermined time period such as five minutes. The system may then return to a stand-by mode where a minimum air flow is maintained by keeping two dampers open and a the fan set at a relatively slow speed.

In Figure 2, an alternative system 210 is shown. This system is based on an example hotel floor comprising six bedrooms 220, three on each side of a corridor 228. Each bedroom 220 has an en-suite bathroom 222.

Each bathroom 222 has an extraction point 270. Each bedroom has a supply point 272. Each bedroom and bathroom also has a sensor 100. The sensors are connected to the controller (not shown) by wiring 125, although wireless connections are contemplated.

Each supply 272, or exhaust 270 point is connected by branch ducting 254, 256 to main ducts 250, 252. The main ducts 250, 252 are located above the corridor 228 separating the two sets of bedrooms 220.

One of the main ducts 250 is the exhaust duct extracting air from the bathrooms by means of a fan 240 located in the duct 250 and forcing it out into the atmosphere.

The other main duct 252 is the supply duct bringing in fresh air from outside. A heat exchanger may be employed to recover heat from the extracted air before it leaves the building and transfer it to the incoming fresh air.

Each branch duct 254, 256 includes a damper 280, 282 such that each bedroom 220 and bathroom 222 may be independently isolated from or connected to the main ducts 250, 252 as required by the controller.

In a similar manner to the system described with reference to Figure 1 the sensors 100 provide basic information to the controller about the state of each room. The sensors may be PIR, temperature, humidity and so on. More than one type of sensor may be present in each room.

In this way, rooms that are not in use may be left without air movement, or with only minimal air flow from the bedroom to the bathroom. By contrast, rooms in use may have greater airflow. The airflow in each bedroom may be controlled to a certain extent by an occupant of the room with an override controller (not shown).

It will be understood that only a portion of a fully integrated system which would be required in a hotel is shown in Figure 2. Other supply and extraction points may be located in the corridor 228. The main ducts 250, 252 may connect with ducts in other parts of the hotel and on other floors. This is why the main ducts 250, 252 are shown open-ended. Ducts will be closed at their ends if no connections to other ducts are required. More than one fan in each duct 205, 252 may be required especially if the duct lengths are relatively long.

The controller may be pre-programmed to increase air movement in all rooms every morning, or only in rooms marked as being occupied the night before, or for the night coming. Accordingly, the system may include apparatus for the room allocations to be integrated into the controller such that a receptionist may update the controller as people check-in and check-out of the hotel. In this way the efficiency of the air movement system is optimised.

In any embodiment, various devices may be grouped together at least for the purpose of identification by the controller. For instance, in a relatively large network a fan, several dampers and several associated sensors may be grouped together in one group, and another fan and several other dampers and sensors may be grouped together in another group. The controller may then be pre-programmed to use different settings (such as predefined thresholds, rules etc.) to control each group (or "sub-system"). In this way, more fine control of the overall system is possible.

The system may have one of the following states:
Standby - (when no work is occurring) in which all fans and the filter are off to save energy;
Clean - (used to clean the ducting) in which all fans are running at the maximum limit set by the installation engineer and all dampers open. The clean state can operate on start-up and/or on schedule and/or before entering standby;
User Override - in which the system suspends all judgment and allows the user to specify the exact state of all devices;
Operational Default - in which the system extracts or provides air but has not yet been configured for energy saving running;
Operationally Optimised - in which the system has been configured and the controller can make decisions based on its pre-programming as to how the individual devices should be set.

An example of the underlying concept for pre-programming of the controller for the operationally optimised state is as follows.

Pre-Conditions: As part of system commissioning the following must be completed to enable the algorithm to run:
1. A fan (either one of the variable ones or the single fixed speed fan) has been designated as the primary fan;
2. If the pressure sensor is fitted then it has been configured with its measurement range. so that % readings can be converted to Pa;
3. If the pressure sensor is fitted then it has been configured with a minimum and maximum target setting. The midpoint of this band is the desired value for optimal efficiency;
4. The primary fan (if variable) has been chosen to either be controlled according to the measures air pressure in the main duct (requires sensor) or by the number of dampers open;
5. The primary fan (if variable) adjustment method been chosen to be either step-wise increments or a single-step (which may require calibration);
6. Device groups have been created in the system configuration to create system nodes which can be locally optimized to give fine-grained optimization;
7. All devices (dampers, the fixed speed fan, variable fans etc.) except the primary fan, the filter and the pressure sensor have been allocated to a device group;
8. The main duct has been configured with its cross-sectional surface area (calculated from either a diameter or a length and width);
9. All dampers have been configured with cross-sectional surface area (calculated from either a diameter or a length and width);
10. All variable speed fans have been given their max kW output in the system configuration so that % utilization can be converted to kW;
11. All variable speed fans have been given their minimum utilization level. This ensures that a fan is always on 'enough' even when workload is low;
12. If the adjustment of the primary fan is single-step then the calibration cycle must have been run which measures system behaviour to learn how to adjust the fan to hit the target pressure in a single step.

## Claims

1. An air movement system programmable controller (120) for operating an air movement system (10), the air movement system (10) comprising:
at least one fan (40);
a plurality of exhaust (70) and/or supply points connected to the at least one fan by ducting (50);
a plurality of dampers (80), each damper associated with one of the at least one exhaust and/or supply points, each damper for regulating air flow through the respective associated exhaust and/or supply point; and
a plurality of sensors (90), each sensor associated with either:
one of the at least one exhaust (70) and/or supply points for sensing a predefined activity within a predefined locale of the at least one exhaust (70) and/or supply points; or
a predefined point in the ducting (50);
wherein the programmable controller (120) is connectable to the fan (40), the dampers (80) and the sensors (90), and is configured to:
automatically adjust the damper (80) associated with one of the at least one exhaust (70) and/or supply points, and adjust the at least one fan (40), in response to a signal generated by the sensor (90) associated with the same one of the at least one exhaust (70) and/or supply points;
**characterised in that** the programmable controller (120)
determines if the at least one fan (40) is fixed-speed or variable-speed;
determines which dampers (80) are open;
receives a signal generated by the plurality of sensors (90), the signal indicative of a sensed predefined activity;
in response to a determination that the at least one fan (40) is a fixed-speed fan, operates the at least one fan (40) in accordance with a pre-set rule, the pre-set rule selected from a plurality of pre-set rules in response to a determination as to which dampers (80) are open, and in response to a reception of the signal indicative of the sensed predefined activity;
in response to a determination that the at least one fan (40) is a variable-speed fan, operates the at least one fan (40) such that the speed of the at least one fan (40) is set to be approximately proportional to the ratio of the total cross-sectional area of all of the plurality of dampers (80) that are open to the cross-sectional area of a predefined duct (50).

2. The air movement system programmable controller (120) of claims 1, wherein the controller (120) is configured to automatically adjust at least one damper (80) and the at least one fan (40) to maintain a minimum or maximum airflow through the air movement system (10) at predetermined times of day and for a predetermined period of time regardless of sensed activity or inactivity.

3. The air movement system programmable controller (120) of any preceding claim, wherein the controller (120) includes an override setting such that each damper (80) and the at least one fan (40) are controllable individually and distinct from any pre-programming.

4. The air movement system programmable controller (120) of claim 2, wherein the controller (120) includes a pre-determinable time period after which the override setting will be cancelled returning the controller to run in accordance with its pre-programming.

5. The air movement system programmable controller (120) of any preceding claim, wherein the controller (120) is configured to prevent the fan (40) being operated at a predetermined volume-flow rate when a predetermined number of dampers (80) are in the closed position.

6. The air movement system programmable controller (120) of any preceding claim, including a memory for storing system events over time.

7. The air movement system programmable controller (120) of any preceding claim, including a filter for filtering air as it passes into or out of the air movement system.

8. The air movement system programmable controller (120) of claim 7, wherein the filter is connected to the controller (120).

9. The air movement system programmable controller (120) of any preceding claim, wherein the sensors (90) are any one or more of a PIR, a pressure sensor, a temperature sensor, a current sensor and a switch.

10. A method of operating an air movement system (10) comprising the steps of:
providing an air movement system (10) comprising:
at least one fan (40);
a plurality of exhaust (70) and/or supply points connected to the at least one fan (40) by ducting (50);
a plurality of dampers (80), each damper (80) associated with one of the at least one exhaust (70) and/or supply points, each damper (80) for regulating air flow through the respective associated exhaust (70) and/or supply point; and
a plurality of sensors (90), each sensor (90) associated with either:
one of the at least one exhaust (70) and/or supply points for sensing a predefined activity within a predefined locale of the at least one exhaust (70) and/or supply points; or
a predefined point in the ducting (50);
**characterised by**:
providing an air movement system programmable controller (120) according to any one of the preceding claims;
determining if the at least one fan (40) is fixed-speed or variable-speed;
determining which dampers (80) are open;
receiving a signal generated by the plurality of sensors (90), the signal indicative of a sensed predefined activity;
in response to a determination that the at least one fan (40) is a fixed-speed fan (40), operating the at least one fan (40) in accordance with a pre-set rule, the pre-set rule selected from a plurality of pre-set rules in response to a determination as to which dampers (80) are open, and in response to a reception of the signal indicative of the sensed predefined activity; and
in response to a determination that the at least one fan (40) is a variable-speed fan (40), operating the at least one fan (40) such that the speed of the at least one fan (40) is set to be approximately proportional to the ratio of the total cross-sectional area of all of the plurality of dampers (80) that are open to the cross-sectional area of a predefined duct (50).

11. The method of claim 10, wherein if the ratio is less than a predefined threshold value the fan (40) is operated at a pre-set speed.

12. The method of either one of claims 10and 11, wherein the predefined duct (50) is the main intake and/or exhaust duct.

13. The method of any one of claims 10to 12, wherein the air movement system includes a filter and the method further comprises the steps of determining if the at least one fan (40) is operational and operating the at least one fan (40) in accordance with said determination.

## Patentansprüche

1. Durch ein Luftbewegungssystem programmierbare Steuerungsvorrichtung (120) für den Betrieb eines Luftbewegungssystems (10), wobei dieses Luftbewegungssystem (10) umfasst:
wenigstens einen Lüfter (40);
eine Mehrzahl von Auslass- (70) und/oder Versorgungspunkten, verbunden mit dem wenigstens einen Lüfter über ein Kanalsystem (50);
eine Mehrzahl von Dämpfern (80), wobei jeder Dämpfer einem der wenigstens einen Auslass und/oder Versorgungspunkte zugeordnet ist, wobei jeder Dämpfer für die Regulierung eines Luftstroms durch den diesem zugeordneten Auslass- und/oder Versorgungspunkt vorgesehen ist; und
einer Mehrzahl von Sensoren (90), wobei jeder Sensor zugeordnet ist entweder:
einem der wenigstens einen Auslass- (70) und/oder Versorgungspunkte für das Erkennen einer vordefinierten Aktivität innerhalb eines vordefinierten Bereichs des wenigstens einen Auslass- (70) und/oder Versorgungspunkts;
oder einem vordefinierten Punkt in dem Kanalsystem (50);
wobei die programmierbare Steuerungsvorrichtung (120) verbindbar ist mit dem Lüfter (40), den Dämpfern (80) und den Sensoren (90) und ausgebildet ist, um:
den Dämpfer (80), der einem der wenigstens einen Auslass- (70) und/oder Versorgungspunkte zugeordnet ist, automatisch einzustellen und den wenigstens einen Lüfter (40) einzustellen, in Antwort auf ein Signal, welches von dem Sensor (90) erzeugt wird, welcher dem gleichen der wenigstens einen Auslass- (70) und/oder Versorgungspunkte zugeordnet ist;
**dadurch gekennzeichnet, dass** die programmierbare Steuerungsvorrichtung (120) bestimmt, ob der wenigstens eine Lüfter (40) mit einer festen oder einer variablen Geschwindigkeit arbeitet;
bestimmt, welche Dämpfer (80) offen sind;
ein Signal empfängt, erzeugt von der Mehrzahl der Sensoren (90), wobei das Signal eine vorgegebene Aktivität anzeigt;
in Antwort auf eine Festlegung, dass der wenigstens eine Lüfter (40) ein solcher ist, der mit einer festgelegten Geschwindigkeit arbeitet, den wenigstens einen Lüfter (40) im Einklang mit einer vorgegebenen Regel betreibt, wobei die vorgegebene Regel ausgewählt ist aus einer Mehrzahl von vorgegebenen Regeln in Antwort auf eine Bestimmung, ob die Dämpfer (80) offen sind und in Antwort auf den Empfang eines Signals, welches die gefühlte vordefinierte Aktivität anzeigt;
in Antwort auf eine Festlegung, dass der wenigstens eine Lüfter (40) ein solcher ist, der mit einer variablen Geschwindigkeit arbeitet, den wenigstens einen Lüfter (40) so betreibt, dass die Geschwindigkeit des wenigstens einen Lüfters (40) so festgelegt wird, dass sie in etwa proportional ist zu dem Verhältnis aus der gesamten Querschnittsfläche aller aus der Mehrzahl der Dämpfer (80), die offen sind, zu der Querschnittsfläche eines vordefinierten Kanals (50).

2. Durch ein Luftbewegungssystem programmierbare Steuerungsvorrichtung (120) nach Anspruch 1, bei der die Steuerungsvorrichtung (120) so ausgebildet ist, dass sie automatisch wenigstens einen Dämpfer (80) einstellt und den wenigstens einen Lüfter (40), um ein Minimum oder Maximum eines Luftstroms durch das Luftbewegungssystem (10) zu vorgegebenen Tageszeiten und für eine vordefinierte Zeitdauer aufrecht zu erhalten, unabhängig davon, ob eine Aktivität oder Inaktivität gefühlt wird.

3. Durch ein Luftbewegungssystem programmierbare Steuerungsvorrichtung (120) nach einem der vorhergehenden Ansprüche, bei der die Steuerungsvorrichtung (120) eine Übersteuereinrichtung einschließt, so dass jeder Dämpfer (80) und der wenigstens eine Lüfter (40) individuell und unabhängig von irgendeiner Vorprogrammierung steuerbar sind.

4. Durch ein Luftbewegungssystem programmierbare Steuerungsvorrichtung (120) nach Anspruch 2, bei der die Steuerungsvorrichtung (120) eine vordefinierbare Zeitperiode umfasst, nach der die Übersteuereinrichtung gelöscht wird und die Steuerungsvorrichtung in ein Arbeiten im Einklang mit einer Vorprogrammierung zurückkehrt.

5. Durch ein Luftbewegungssystem programmierbare Steuerungsvorrichtung (120) nach einem der vorhergehenden Ansprüche, bei der die Steuerungsvorrichtung (120) so ausgebildet ist, dass sie den Lüfter (40) daran hindert, mit einer vorgegebenen Volumenstromrate zu arbeiten, wenn eine vordefinierte Anzahl von Dämpfern (80) sich in geschlossener Position befinden.

6. Durch ein Luftbewegungssystem programmierbare Steuerungsvorrichtung (120) nach einem der vorhergehenden Ansprüche, umfassend einen Speicher, um Systemereignisse über die Zeit zu speichern.

7. Durch ein Luftbewegungssystem programmierbare Steuerungsvorrichtung (120) nach einem der vorhergehenden Ansprüche, umfassend einen Filter, um die Luft zu filtern, wenn sie in das Luftbewegungssystem hinein oder aus diesem hinaus strömt.

8. Durch ein Luftbewegungssystem programmierbare Steuerungsvorrichtung (120) nach Anspruch 7, bei der der Filter mit der Steuerungsvorrichtung (120) verbunden ist.

9. Durch ein Luftbewegungssystem programmierbare Steuerungsvorrichtung (120) nach einem der vorhergehenden Ansprüche, bei der die Sensoren (90) beliebige ausgewählt aus PIR, einem Drucksensor, einem Temperatursensor und einem Schalter sind.

10. Verfahren zum Betrieb eines Luftbewegungssystems (10) umfassend die Schritte:
Bereitstellen eines Luftbewegungssystems (10) umfassend:
wenigstens einen Lüfter (40);
eine Mehrzahl von Auslass-(70) und/oder Versorgungspunkten, verbunden mit dem wenigstens einen Lüfter (40) über ein Kanalsystem (50);
eine Mehrzahl von Dämpfern (80), wobei jeder Dämpfer (80) mit einem der wenigstens einen Auslass-(70) und/oder Versorgungspunkte verbunden ist, wobei jeder Dämpfer (80) dazu dient, den Luftstrom durch den entsprechenden Auslass-(70) und/oder Versorgungspunkt zu regeln; und
eine Mehrzahl von Sensoren (90), wobei jeder Sensor (90) verbunden ist, entweder:
mit einem der wenigstens einen Auslass-(70) und/oder Versorgungspunkte für das Abfühlen einer vordefinierten Aktivität innerhalb eines Bereichs der wenigstens einen Auslass-(70) und/oder Versorgungspunkte; oder
einem vordefinierten Punkt in dem Kanalsystem (50);
**dadurch gekennzeichnet, dass**
eine programmierbare Steuerungsvorrichtung (120) für ein Luftbewegungssystem gemäß einem der vorhergehenden Ansprüche zur Verfügung gestellt wird;
bestimmt wird, ob der wenigstens eine Lüfter (40) mit festgelegter oder variabler Geschwindigkeit arbeitet;
bestimmt wird, welche Dämpfer (80) offen sind;
ein Signal empfangen wird, erzeugt durch die Mehrzahl der Sensoren (90), wobei das Signal eine vordefinierte Aktivität anzeigt;
in Antwort auf die Bestimmung, dass der wenigstens eine Lüfter (40) mit festgelegter Geschwindigkeit läuft, der wenigstens eine Lüfter (40) im Einklang mit einer vorgegebenen Regel betrieben wird, wobei diese vorgegebene Regel ausgewählt wird aus einer Mehrzahl festgelegter Regeln in Antwort auf eine Bestimmung, welche Dämpfer (80) offen sind, und in Antwort auf den Empfang eines Signals, das eine gefühlte vordefinierte Aktivität anzeigt; und
in Antwort auf die Bestimmung, dass der wenigstens eine Lüfter (40) mit variabler Geschwindigkeit arbeitet, betreiben des wenigstens einen Lüfters (40) so, dass die Geschwindigkeit des wenigstens einen Lüfters (40) im Wesentlichen proportional ist zu dem Verhältnis der gesamten Querschnittsfläche aller aus der Mehrzahl der Dämpfer (80), die geöffnet sind, zu der Querschnittsfläche eines vorgegebenen Kanals (50).

11. Verfahren nach Anspruch 10, bei dem das Verhältnis geringer ist als ein vordefinierter Schwellenwert, wobei der Lüfter mit einer zuvor festgelegten Geschwindigkeit betrieben wird.

12. Verfahren nach einem der Ansprüche 10 oder 11, bei dem der vorgegebene Kanal (50) der Haupteingangs- und/oder -ausgangskanal ist.

13. Verfahren nach einem der Ansprüche 10 bis 12, bei dem das Luftbewegungssystem einen Filter umfasst und das Verfahren weiterhin die Schritte umfasst des Bestimmens, ob der wenigstens eine Lüfter (40) arbeitet und Betreiben des wenigstens einen Lüfters (40) im Einklang mit dieser Bestimmung.

## Revendications

1. Contrôleur programmable de système de mouvement d'air (120) pour faire fonctionner un système de mouvement d'air (10), le système de mouvement d'air (10) comprenant :
au moins un ventilateur (40) ;
une pluralité de points d'échappement (70) et/ou d'alimentation reliés à l'au moins un ventilateur par conduits (50) ;
une pluralité de registres (80), chaque registre étant associé à l'un parmi l'au moins un point d'échappement et/ou d'alimentation, chaque registre étant destiné à réguler l'écoulement d'air à travers le point d'échappement et/ou d'alimentation associé respectif ; et
une pluralité de capteurs (90), chaque capteur étant associé :
à l'un parmi l'au moins un point d'échappement (70) et/ou d'alimentation pour détecter une activité prédéfinie dans un emplacement prédéfini de l'au moins un point d'échappement (70) et/ou d'alimentation ; ou
à un point prédéfini dans les conduits (50) ;
le contrôleur programmable (120) étant apte à être reliée au ventilateur (40), aux registres (80) et aux capteurs (90), et étant configuré pour :
ajuster automatiquement le registre (80) associé à l'un parmi l'au moins un point d'échappement (70) et/ou d'alimentation, et ajuster l'au moins un ventilateur (40), en réponse à un signal généré par le capteur (90) associé à celui parmi l'au moins un point d'échappement (70) et/ou d'alimentation ;
**caractérisé par le fait que** le contrôleur programmable (120) :
détermine si l'au moins un ventilateur (40) est à vitesse fixe ou à vitesse variable ;
détermine quels registres (80) sont ouverts ;
reçoit un signal généré par la pluralité de capteurs (90), le signal étant indicateur d'une activité prédéfinie détectée ;
en réponse à la détermination que l'au moins un ventilateur (40) est un ventilateur à vitesse fixe, fait fonctionner l'au moins un ventilateur (40) selon une règle prédéfinie, la règle prédéfinie étant choisie parmi une pluralité de règles prédéfinies en réponse à la détermination quant à quels registres (80) sont ouverts, et en réponse à la réception du signal indicateur de l'activité prédéfinie détectée ;
en réponse à la détermination que l'au moins un ventilateur (40) est un ventilateur à vitesse variable, fait fonctionner l'au moins un ventilateur (40) de telle sorte que la vitesse de l'au moins un ventilateur (40) est définie pour être approximativement proportionnelle au rapport de la section transversale totale de l'ensemble de la pluralité de registres (80) qui sont ouverts à la section transversale d'un conduit prédéfini (50).

2. Contrôleur programmable de système de mouvement d'air (120) selon la revendication 1, dans lequel le contrôleur (120) est configuré pour ajuster automatiquement au moins un registre (80) et l'au moins un ventilateur (40) pour maintenir un écoulement d'air minimal ou maximal à travers le système de mouvement d'air (10) à des heures prédéterminées de la journée et pendant une période de temps prédéterminée, indépendamment de l'activité détectée ou de l'inactivité.

3. Contrôleur programmable de système de mouvement d'air (120) selon l'une quelconque des revendications précédentes, dans laquelle le contrôleur (120) comprend un réglage prioritaire de telle sorte que chaque registre (80) et l'au moins un ventilateur (40) sont apte à être commandés individuellement et séparément de toute pré-programmation.

4. Contrôleur programmable de système de mouvement d'air (120) selon la revendication 2, dans lequel le contrôleur (120) comprend une période de temps apte à être prédéterminée, après laquelle le réglage prioritaire sera annulé, ramenant le contrôleur à fonctionner de nouveau selon sa pré-programmation.

5. Contrôleur programmable de système de mouvement d'air (120) selon l'une quelconque des revendications précédentes, dans lequel le contrôleur (120) est configuré pour empêcher le ventilateur (40) de fonctionner à un débit volumique prédéterminé lorsqu'un nombre prédéterminé de registres (80) sont dans la position fermée.

6. Contrôleur programmable de système de mouvement d'air (120) selon l'une quelconque des revendications précédentes, comprenant une mémoire pour stocker des événements de système au fil du temps.

7. Contrôleur programmable de système de mouvement d'air (120) selon l'une quelconque des revendications précédentes, comprenant un filtre pour filtrer l'air à mesure qu'il passe dans ou hors du système de mouvement d'air.

8. Contrôleur programmable de système de mouvement d'air (120) selon la revendication 7, dans lequel le filtre est relié au contrôleur (120).

9. Contrôleur programmable de système de mouvement d'air (120) selon l'une quelconque des revendications précédentes, dans lequel les capteurs (90) sont n'importe lequel ou n'importe lesquels parmi un capteur infrarouge passif, un capteur de pression, un capteur de température, un capteur de courant et un commutateur.

10. Procédé de fonctionnement d'un système de mouvement d'air (10) comprenant les étapes :
fournir un système de mouvement d'air (10) comprenant :
au moins un ventilateur (40) ;
une pluralité de points d'échappement (70) et/ou d'alimentation reliés à l'au moins un ventilateur (40) par conduit (50) ;
une pluralité de registres (80), chaque registre étant associé à l'un parmi l'au moins un point d'échappement (70) et/ou d'alimentation, chaque registre (80) étant destiné à réguler un écoulement d'air à travers le point d'échappement (70) et/ou d'alimentation associé respectif ; et
une pluralité de capteurs (90), chaque capteur étant associé :
à l'un parmi l'au moins un point d'échappement (70) et/ou d'alimentation pour détecter une activité prédéfinie dans un emplacement prédéfini de l'au moins un point d'échappement (70) et/ou d'alimentation ; ou
à un point prédéfini dans le conduit (50) ;
**caractérisé par** :
fournir un contrôleur programmable de système de mouvement d'air (120) selon l'une quelconque des revendications précédentes ;
déterminer si l'au moins un ventilateur (40) est à vitesse fixe ou à vitesse variable ;
déterminer quels registres (80) sont ouverts ;
recevoir un signal généré par la pluralité de capteurs (90), le signal étant indicateur d'une activité prédéfinie détectée ;
en réponse à la détermination que l'au moins un ventilateur (40) est un ventilateur à vitesse fixe (40), faire fonctionner l'au moins un ventilateur (40) selon une règle prédéfinie, la règle prédéfinie étant choisie parmi une pluralité de règles prédéfinies en réponse à la détermination quant à quels registres (80) sont ouverts, et en réponse à une réception du signal indicateur de l'activité prédéfinie détectée ; et
en réponse à une détermination que l'au moins un ventilateur (40) est un ventilateur à vitesse variable (40), faire fonctionner l'au moins un ventilateur (40) de telle sorte que la vitesse de l'au moins un ventilateur (40) est définie pour être approximativement proportionnelle au rapport de la section transversale totale de l'ensemble de la pluralité de registres (80) qui sont ouverts à la section transversale d'un conduit prédéfini (50).

11. Procédé selon la revendication 10, dans lequel, si le rapport est inférieur à une valeur de seuil prédéfinie, le ventilateur (40) est amené à fonctionner à une vitesse prédéfinie.

12. Procédé selon l'une des revendications 10 et 11, dans lequel le conduit prédéfini (50) est le conduit d'admission et/ou d'échappement principal.

13. Procédé selon l'une quelconque des revendications 10 à 12, dans lequel le système de mouvement d'air comprend un filtre et le procédé comprend en outre les étapes pour déterminer si l'au moins un ventilateur (40) est fonctionnel et pour faire fonctionner l'au moins un ventilateur (40) selon ladite détermination.
